# EUROPEAN PATENT SPECIFICATION

(11) **EP 2 740 653 B1**
(45) Date of publication and mention of the grant of the patent: **18.03.2015**
(21) Application number: 13194342.5
(22) Date of filing: 26.11.2013
(51) Int. Cl.: B62J 35/00, B62J 37/00, F02M 37/00

(54) **Motorcycle**
Motorrad
Motocyclette

(30) Priority: 06.12.2012 JP 2012267051
(43) Date of publication of application: 11.06.2014
(73) Proprietor: Yamaha Hatsudoki Kabushiki Kaisha, Iwata-shi, Shizuoka 438-8501 (JP)
(72) Inventor: Tokikou, Takamasa, Iwata-shi Shizuoka 438-8501 (JP)
(74) Representative: Grünecker, Kinkeldey, Stockmair & Schwanhäusser

(56) References cited:
- EP-A1- 2 249 009
- EP-A2- 1 081 034
- EP-A2- 2 301 831
- JP-A- 2008 008 301

## Description

The present invention relates to a motorcycle **according to the preamble of independent claim 1. Such a motorcycle can be taken from the prior art document** EP 2 249 009 A1**.**

A motorcycle includes a fuel pump unit for supplying fuel to an engine from a fuel pump, a filter and a pressure regulator. The fuel is discharged from a fuel tank by the fuel pump unit, and is supplied to the engine through the filter and the pressure regulator.

For example, Japan Laid-open Patent Application Publication No. JP-A-2011-74766 describes a motorcycle that the fuel pump unit is attached to the fuel tank. Further, the filter and the pressure regulator are attached to a vehicle body frame. The filter and the pressure regulator are respectively connected to the fuel pump unit through pipes.

When a filter is disposed upstream of the fuel pump unit, the filter is required to be disposed inside the fuel tank. In this case, it is not easy to access the filter or the pipe connecting the filter and the fuel pump unit. In comparison with this, when a filter is disposed downstream of the fuel pump unit in a path of supplying the fuel as described above, the filter can be easily disposed outside the fuel tank. In this case, it is easy to access the filter or the pipe connecting the filter and the fuel pump unit. Accordingly, the motorcycle can be enhanced in its maintenance performance.

However, when the filter and the pressure regulator are attached to the vehicle body frame as seen in the motorcycle described in Japan Laid-open Patent Application Publication No. JP-A-2011-74766, it is required to detach the pipe connecting the filter and the fuel pump unit when the fuel tank is detached from the vehicle body. Further, it is also required to detach the pipe connecting the pressure regulator and the fuel pump unit. Yet further, it is required to remove the fuel remaining within the fuel tank in order to detach these pipes from the fuel pump unit. Therefore, workability is deteriorated in detaching the fuel tank.

It is an object of the present invention to provide a motorcycle whereby workability can be enhanced in detaching a fuel tank.

According to the present invention said object is solved by a motorcycle having the features of independent claim 1. Preferred embodiments are laid down in the dependent claims.

A motorcycle according to a first aspect includes a head pipe, a vehicle body frame, a fuel tank, an engine, a fuel pump unit, a filter and a pressure regulator. The vehicle body frame is extended rearwards and downwards from the head pipe. The fuel tank has: a tank upper portion disposed over the vehicle body frame; and a tank lateral portion disposed laterally to the vehicle body frame. The fuel tank is disposed over and astride the vehicle body frame. The engine is disposed under the vehicle body frame. The fuel pump unit is attached to a lower surface of the fuel tank. The fuel pump unit is configured to supply a fuel to the engine from the fuel tank. The filter is disposed downstream of the fuel pump unit in a fuel supply path produced from the fuel tank to the engine. The filter is attached to the fuel tank. The pressure regulator is disposed downstream of the filter in the fuel supply path produced from the fuel tank to the engine. The pressure regulator is attached to the fuel tank.

A motorcycle according to a second aspect relates to the motorcycle according to the first aspect, and wherein the filter is attached to the tank lateral portion.

A motorcycle according to a third aspect relates to the motorcycle according to the second aspect, and wherein the filter is positioned under the tank lateral portion.

A motorcycle according to a fourth aspect relates to the motorcycle according to any of the first to third aspects, and further includes a cover member. The cover member is disposed laterally to the filter and directs an air stream.

A motorcycle according to a fifth aspect relates to the motorcycle according to any of the first to fourth aspects, and wherein the lower surface of the fuel tank is slanted rearwards and obliquely downwards. The fuel pump unit is attached to a rear portion of the fuel tank. The filter and the pressure regulator are respectively attached to the fuel tank in positions forward of the attached position of the fuel pump unit.

A motorcycle according to a sixth aspect relates to the motorcycle according to any of the first to fifth aspects, and further includes an injector. The injector is connected to the pressure regulator through a pipe and is configured to supply the fuel to the engine. The pressure regulator and the injector are disposed between the fuel pump unit and the filter in a vehicle back-and-forth direction.

A motorcycle according to a seventh aspect relates to the motorcycle according to the sixth aspect, and wherein the pressure regulator is disposed higher than the filter.

A motorcycle according to an eighth aspect relates to the motorcycle according to any of the first to seventh aspects, and wherein an axis of the filter is disposed along a fuel tank surface opposed to the filter.

A motorcycle according to a ninth aspect relates to the motorcycle according to any of the first to eighth aspects, and wherein an axis of the pressure regulator is disposed along a fuel tank surface opposed to the pressure regulator.

A motorcycle according to a tenth aspect relates to the motorcycle according to any of the first to ninth aspects, and wherein a lower surface of the tank upper portion is positioned higher than a lower surface of the tank lateral portion. The pressure regulator is attached to the lower surface of the tank upper portion.

A motorcycle according to an eleventh aspect relates to the motorcycle according to any of the first to tenth aspects, and wherein the filter is connected to the fuel pump unit through a pipe.

A motorcycle according to a twelfth aspect relates to the motorcycle according to any of the first to eleventh aspects, and wherein the pressure regulator is connected to the filter through a pipe.

### Advantageous Effects of Invention

In the motorcycle according to the first aspect, the filter is disposed downstream of the fuel pump unit. In addition, the pressure regulator is disposed downstream of the filter. Therefore, the filter and the pressure regulator can be easily accessed. Accordingly, the maintenance performance of the motorcycle is enhanced. Further, the filter and the pressure regulator are attached to the fuel tank. Therefore, the fuel tank can be easily detached from the vehicle body together with the filter and the pressure regulator. Accordingly, workability can be enhanced in detaching the fuel tank.

In the motorcycle according to the second aspect, the filter can be easily accessed. Therefore, the maintenance performance of the filter can be enhanced.

In the motorcycle according to the third aspect, the filter can be easily accessed. Therefore, the maintenance performance of the filter can be enhanced.

In the motorcycle according to the fourth aspect, the filter is protected by the cover member. Further, the fuel can be inhibited from being increased to a high temperature in the filter by means of the air stream to be directed by the cover member.

In the motorcycle according to the fifth aspect, the fuel pump unit can be disposed in a low position. Accordingly, it is possible to effectively utilize the fuel contained within the fuel tank. Further, it is possible to compactly dispose the fuel pump unit, the filter and the pressure regulator.

In the motorcycle according to the sixth aspect, it is possible to reduce the distance between the pressure regulator and the injector. Therefore, it is possible to shorten the pipe connecting the pressure regulator and the injector. Accordingly, it is possible to reduce the amount of fuel flowing out of the pipe in detaching the pipe from the injector.

In the motorcycle according to the seventh aspect, the fuel residing upstream of the pressure regulator less easily flows out of the pipe in detaching the pipe from the injector. Therefore, it is possible to further reduce the amount of fuel flowing out of the pipe in detaching the pipe from the injector.

In the motorcycle according to the eighth aspect, the filter and the fuel tank can be compactly disposed.

In the motorcycle according to the ninth aspect, the pressure regulator and the fuel tank can be compactly disposed.

In the motorcycle according to the tenth aspect, the pressure regulator can be disposed in a high position.

In the motorcycle according to the eleventh aspect, the fuel tank can be easily detached from the vehicle body without detaching the pipe that connects the filter and the fuel pump unit. Accordingly, workability can be enhanced in detaching the fuel tank.

In the motorcycle according to the twelfth aspect, the fuel tank can be easily detached from the vehicle body without detaching the pipe that connects the filter and the pressure regulator. Accordingly, workability can be enhanced in detaching the fuel tank.

### BRIEF DESCRIPTION OF THE DRAWINGS

Referring now to the attached drawings which form a portion of this original disclosure:
FIG. 1 is a side view of a motorcycle according to an exemplary and preferred embodiment;
FIG. 2 is a side view of a structure including a fuel tank and the surrounding thereof;
FIG. 3 is a cross-sectional view of FIG. 2 taken along a line III-III;
FIG. 4 is a schematic diagram of a fuel supply system installed in the motorcycle;
FIG. 5 is a partial cross-sectional side view of the motorcycle for illustrating the fuel supply system;
FIG. 6 is a partial bottom view of the motorcycle for illustrating the fuel supply system;
FIG. 7 is a cross-sectional side view of a fuel pump unit according to the exemplary and preferred embodiment;
FIG. 8 is a cross-sectional view of the fuel pump unit taken along a line VIII-VIII in FIG. 7;
FIG. 9 is a cross-sectional view of the fuel pump unit taken along a line IX-IX in FIG. 7; and
FIG. 10 is a cross-sectional side view of a fuel pump unit according to a modification.

### DETAILED DESCRIPTION OF THE EMBODIMENTS

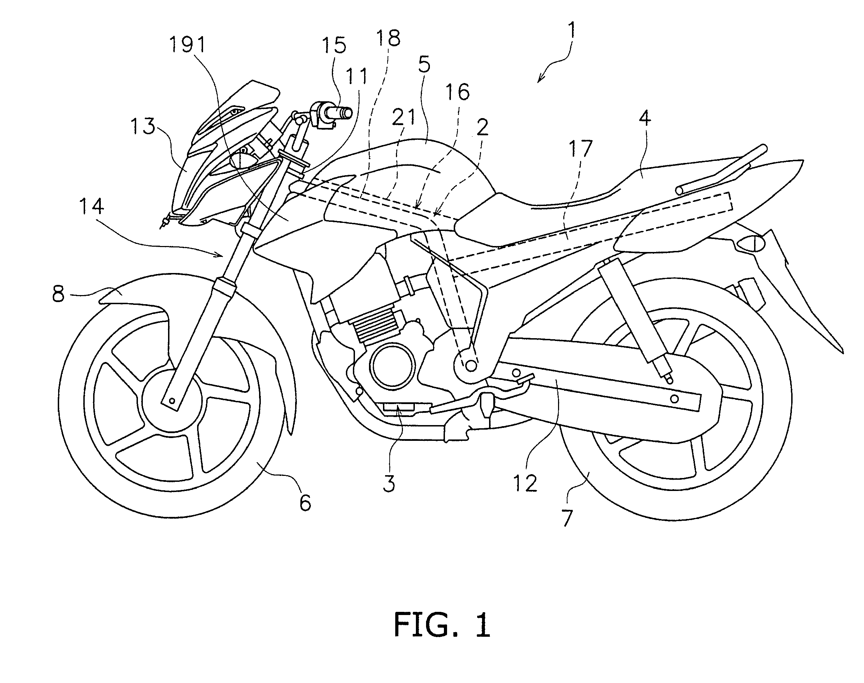

FIG. 1 illustrates a motorcycle 1 according to an exemplary and preferred embodiment. FIG. 1 is a side view of the motorcycle 1. It should be noted that in the following explanation, the terms "front", "rear", "right" and "left" mean corresponding directions seen from a rider riding on the motorcycle 1 unless especially explained. The motorcycle 1 includes a vehicle body frame 2, an engine 3, a seat 4, a fuel tank 5, a front wheel 6 and a rear wheel 7.

The vehicle body frame 2 includes a head pipe 11, a front frame 16 and a rear frame 17. A front fork 14 is supported by the head pipe 11. A handle 15 is fixed to the upper end of the front fork 14. Further, a head light unit 13 is disposed forwards of the head pipe 11. The front wheel 6 is rotatably supported by the lower portion of the front fork 14. A front fender 8 is disposed over the front wheel 6.

The front frame 16 is composed of a pipe-shaped member bent at a plurality of positions. A swing arm 12 is coupled to the rear end of the front frame 16, while being pivotable up and down. The rear wheel 7 is rotatably supported by the rear end of the swing arm 12. The front frame 16 has an upper frame portion 18. The upper frame portion 18 is extended from the head pipe 11 to the rearward and downward.

The rear frame 17 is composed of a pair of right and left pipe-shaped members. It should be noted that FIG. 1 illustrates only the left-side one of the right and left pipe-shaped members. The rear frame 17 is continued to and backwardly extended from the front frame 16.

The seat 4 and the fuel tank 5 are attached to the upper portion of the vehicle body frame 2. The fuel tank 5 is disposed forwards of the seat 4. The fuel tank 5 is disposed over the front frame 16. The seat 4 is disposed over the rear frame 17.

The engine 3 is configured to transmit driving force to the rear wheel 7 through a chain (not illustrated in the figures). The engine 3 is disposed under the fuel tank 5, while being supported by the front frame 16. The engine 3 is disposed under the upper frame portion 18.

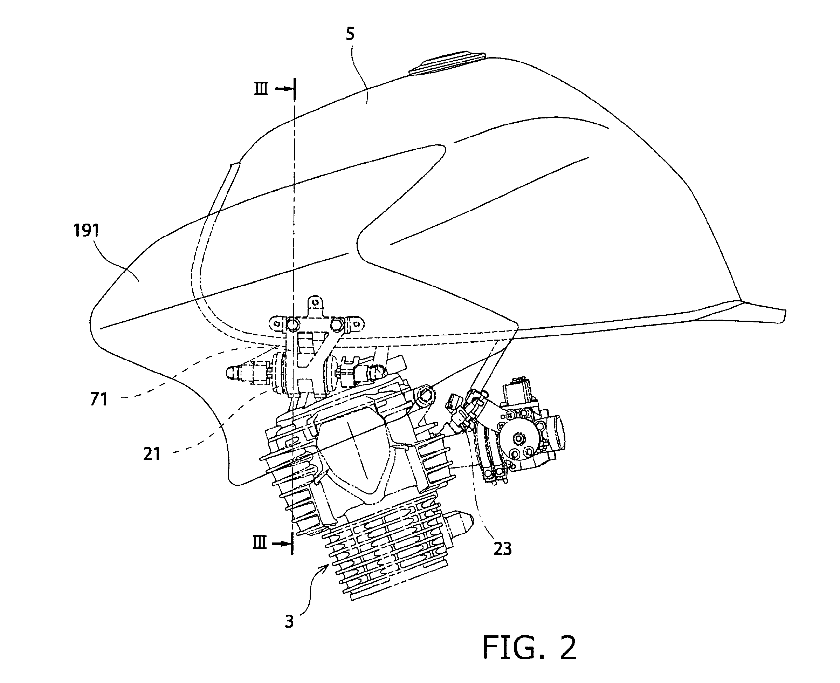

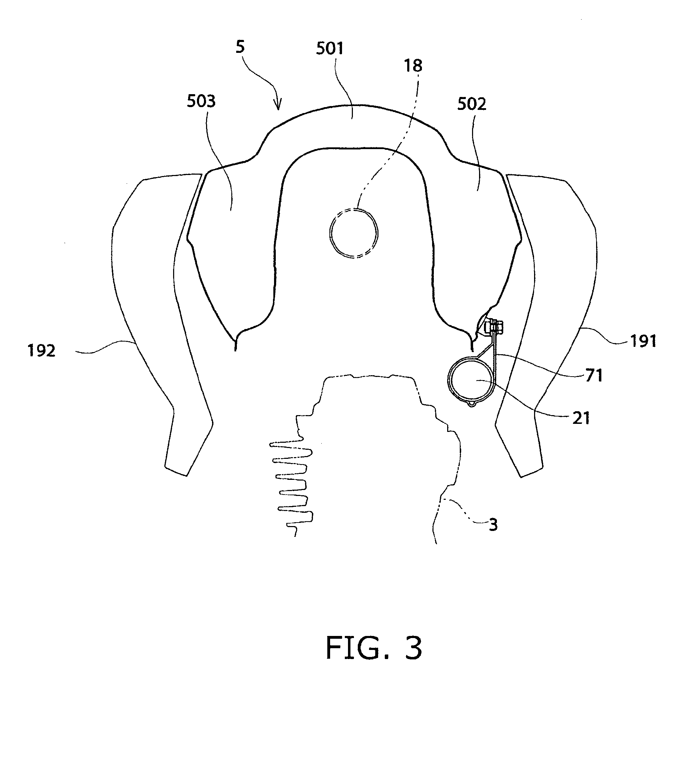

FIG. 2 is a side view of the structure of the fuel tank 5 and its surrounding. FIG. 3 is a cross-sectional view of FIG. 2 taken along a line III-III. As illustrated in FIGS. 2 and 3, cover members 191 and 192 are disposed laterally to the fuel tank 5. The cover members 191 and 192 direct air streams. In a side view, the cover members 191 and 192 are overlapped with a portion of the fuel tank 5. Further, in the side view, the cover members 191 and 192 are overlapped with a portion of the engine 3. When described in detail, the cover members 191 and 192 are composed of the first cover member 191 and the second cover member 192. The first cover member 191 is positioned laterally leftwards of the fuel tank 5. The second cover member 192 is positioned laterally rightwards of the fuel tank 5.

As illustrated in FIG. 3, the fuel tank 5 is disposed over and astride the upper frame portion 18. When described in detail, the fuel tank 5 has a tank upper portion 501, a first tank lateral portion 502 and a second tank lateral portion 503. The tank upper portion 501 is disposed over the upper frame portion 18. The first tank lateral portion 502 is disposed laterally leftwards of the upper frame portion 18. The second tank lateral portion 503 is disposed laterally rightwards of the upper frame portion 18. The lower surface of the tank upper portion 501 is positioned higher than the lower surface of the first tank lateral portion 502 and the lower surface of the second tank lateral portion 503.

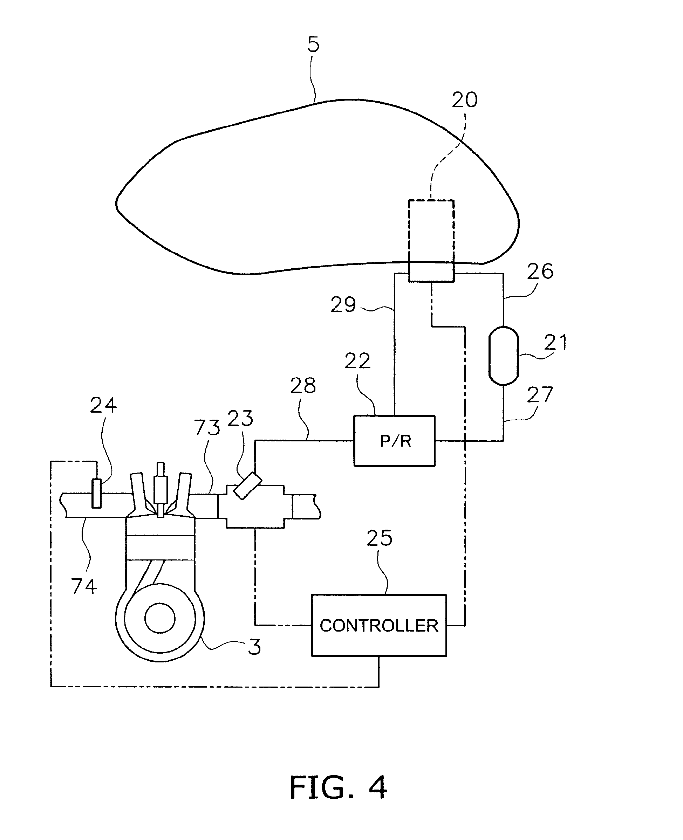

FIG. 4 is a schematic diagram of a fuel supply system installed in the motorcycle 1. The fuel supply system includes a fuel pump unit 20, a fuel filter 21, a pressure regulator 22, an injector 23, an oxygen sensor 24 and a controller 25.

The fuel pump unit 20 is attached to the fuel tank 5. The fuel filter 21 is disposed downstream of the fuel pump unit 20 in a fuel supply path produced from the fuel tank 5 to the engine 3. The fuel filter 21 is connected to the fuel pump unit 20 through a first fuel pipe 26. The fuel pump unit 20 is configured to pump out the fuel contained within the fuel tank 5 to the first fuel pipe 26. The fuel filter 21 is configured to filter the fuel.

The pressure regulator 22 is disposed downstream of the fuel filter 21 in the fuel supply path produced from the fuel tank 5 to the engine 3. The pressure regulator 22 is connected to the fuel filter 21 through a second fuel pipe 27. The pressure regulator 22 is configured to keep the fuel residing in the first fuel pipe 26, the second fuel pipe 27 and a third fuel pipe 28 at a constant pressure. The injector 23 is connected to the pressure regulator 22 through the third fuel pipe 28. The injector 23 is configured to inject the fuel into the air within an induction pipe 73 of the engine 3. Further, the pressure regulator 22 and the fuel pump unit 20 are connected through a return fuel pipe 29. Excess fuel, having not been supplied to the injector 23, returns to the fuel pump unit 20 through the return fuel pipe 29.

The oxygen sensor 24 is disposed within an exhaust pipe 74 of the engine 3. The oxygen sensor 24 is a sensor using, for instance, zirconia. The oxygen sensor 24 is configured to detect the concentration of oxygen contained in exhaust gas. The oxygen sensor 24 is capable of detecting the oxygen concentration with an effective accuracy level when the temperature of the oxygen sensor 24 reaches a predetermined activation temperature or greater. The oxygen sensor 24 is configured to transmit a signal corresponding to the detected oxygen concentration to the controller 25.

The controller 25 is an electronic control device including a processing device such as a CPU and a recording device such as a memory. The controller 25 is configured to control the amount of fuel to be discharged from the fuel pump unit 20. The controller 25 is configured to control the amount of fuel to be injected by the injector 23. The controller 25 is configured to compute an air-fuel ratio that is suitable for the oxygen concentration detected by the oxygen sensor 24.

For example, when the rate of alcohol contained in the fuel is changed, the concentration of oxygen contained in the exhaust gas is accordingly changed. In this case, the controller 25 is configured to compute an air-fuel ratio that is suitable for the changed oxygen concentration. Further, the controller 25 is configured to control the injector 23 based on the computation result. For example, the controller 25 is configured to estimate the present alcohol content rate based on an output value of the oxygen sensor and compute the injection amount of the fuel based on the estimated alcohol content rate.

The controller 25 is configured to store the computed air-fuel ratio or the estimated alcohol content rate. The controller 25 is configured to control the injector 23 based on the stored air-fuel ratio or the stored alcohol content rate in the cold start of the engine 3. The cold start means that the engine 3 is started where the temperature thereof is the same as the outdoor temperature. In the cold start, the temperature of the oxygen sensor 24 is lower than the activation temperature.

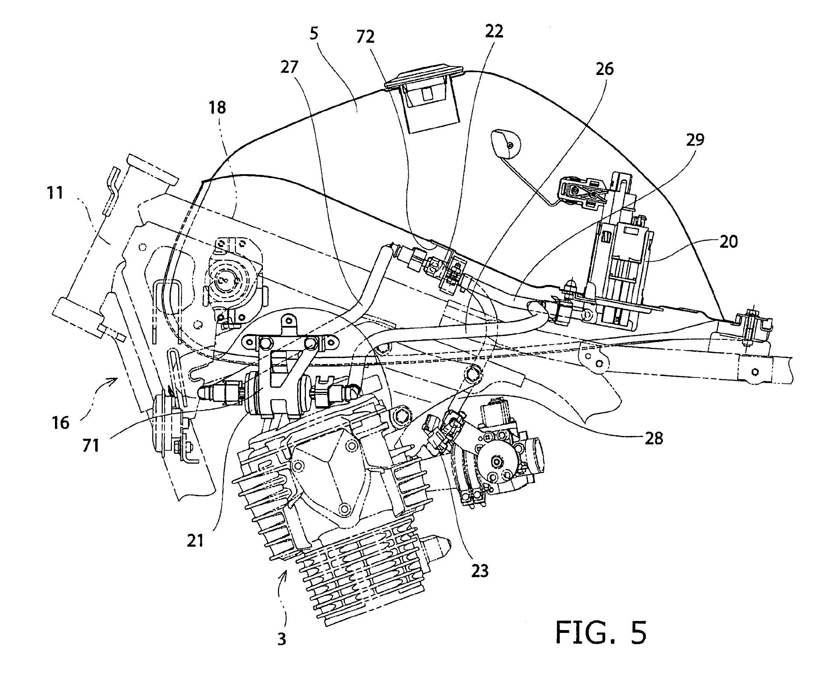

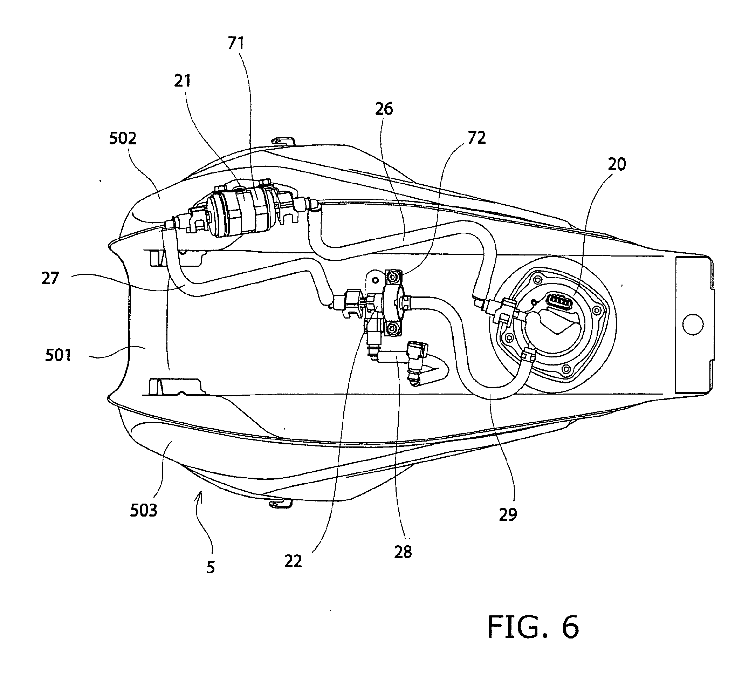

FIG. 5 is a cross-sectional side view of a portion of the motorcycle 1 for illustrating the fuel supply system. FIG. 6 is a bottom-side view of a portion of the motorcycle 1 for illustrating the fuel supply system. As illustrated in FIGS. 5 and 6, the fuel pump unit 20 is attached to the lower surface of the fuel tank 5. The fuel pump unit 20 is attached to the rear portion of the fuel tank 5. The lower surface of the fuel tank 5 is slanted rearwards and obliquely downwards. Therefore, the fuel pump unit 20 is attached to a portion of the fuel tank 5 that is located in a relatively low position.

The fuel filter 21 is attached to the fuel tank 5. The fuel filter 21 is attached to the first tank lateral portion 502. When described in detail, the fuel filter 21 is attached to the fuel tank 5 through a bracket 71. As illustrated in FIG. 3, the bracket 71 is fixed to the first tank lateral portion 502, while being downwardly protruded from the first tank lateral portion 502. The fuel filter 21 is positioned under the first tank lateral portion 502. As illustrated in FIG. 5, the fuel filter 21 is positioned forwards of the fuel pump unit 20. The fuel filter 21 is positioned rearwards of the front end of the fuel tank 5.

The axis of the fuel filter 21 is disposed along a surface of the fuel tank 5 that is opposed to the fuel filter 21. In other words, the axis of the fuel filter 21 is disposed along the lower surface of the first tank lateral portion 502. The first cover member 191 is disposed laterally leftwards of the fuel filter 21. In a side view, the fuel filter 21 is disposed while being overlapped with the first cover member 191. As illustrated in FIG. 3, the fuel filter 21 is positioned between the first cover member 191 and the engine 3 in a vehicle right-and-left direction.

As illustrated in FIG. 5, the pressure regulator 22 is attached to the fuel tank 5. The pressure regulator 22 is attached to the lower surface of the tank upper portion 501. When described in detail, the pressure regulator 22 is attached to the fuel tank 5 through a bracket 72. The pressure regulator 22 is disposed in a position higher than the fuel filter 21. The pressure regulator 22 is disposed in a position higher than the portion that the return fuel pipe 29 and the fuel pump unit 20 are attached to each other.

The pressure regulator 22 is positioned forwards of the fuel pump unit 20. The pressure regulator 22 is positioned rearwards of the fuel filter 21. In other words, the pressure regulator 22 is positioned between the fuel pump unit 20 and the fuel filter 21 in a back-and-forth direction. On the other hand, the injector 23 is positioned under the pressure regulator 22 in a side view. Therefore, the pressure regulator 22 and the injector 23 are disposed between the fuel pump unit 20 and the fuel filter 21 in the back-and-forth direction.

The axis of the pressure regulator 22 is disposed along a surface of the fuel tank 5 that is opposed to the pressure regulator 22. In other words, the axis of the pressure regulator 22 is disposed along the lower surface of the tank upper portion 501. As illustrated in FIG. 6, the pressure regulator 22 is disposed eccentrically to the fuel filter 21 from the center line of the fuel tank 5 in the vehicle right-and-left direction.

The fuel filter 21 and the pressure regulator 22 are attached to the fuel tank 5 in positions forward of the attached position of the fuel pump unit 20. The fuel filter 21, the pressure regulator 22 and the fuel pump unit 20 are disposed between the front end and the rear end of the fuel tank 5 in the back-and-forth direction.

In the motorcycle 1 according to the present exemplary embodiment, the fuel filter 21 is disposed downstream of the fuel pump unit 20 in the fuel supply path. Further, the pressure regulator 22 is disposed downstream of the fuel filter 21 in the fuel supply path. Therefore, it is easier to access the fuel filter 21 and the pressure regulator 22 in comparison with the structure that the fuel filter 21 and the pressure regulator 22 are disposed within the fuel tank 5. The motorcycle 1 can be thereby enhanced in its maintenance performance.

The fuel filter 21 and the pressure regulator 22 are attached to the fuel tank 5. Therefore, the fuel tank 5 can be easily detached from the vehicle body, while the fuel filter 21 and the pressure regulator 22 are attached to the fuel tank 5. Further, only the third fuel pipe 28 is herein required to be detached among the plural fuel pipes, whereas the first fuel pipe 26, the second fuel pipe 27 and the return fuel pipe 29 are not required to be detached. Therefore, it is possible to omit a series of works of detaching the first fuel pipe 26, the second fuel pipe 27 and the return fuel pipe 29. Further, it is possible to omit a series of works of processing the fuel remaining in the inside of the first fuel pipe 26, the second fuel pipe 27 and the return fuel pipe 29. Accordingly, workability can be enhanced in detaching the fuel tank 5.

The fuel filter 21 is attached to the first tank lateral portion 502. It is thereby easy to access the fuel filter 21. The fuel filter 21 is positioned under the first tank lateral portion 502. It is thereby easy to access the fuel filter 21.

The first cover member 191 is disposed laterally to the fuel filter 21. Therefore, the fuel filter 21 is protected by the first cover member 191. Further, the air stream directed by the first cover member 191 can inhibit the fuel from increasing to a high temperature in the fuel filter 21.

The lower surface of the fuel tank 5 is slanted rearwards and obliquely downwards. Further, the fuel pump unit 20 is attached to the rear portion of the fuel tank 5. The fuel pump unit 20 can be thus disposed in a low position. Accordingly, the fuel can be effectively utilized even when the small amount of fuel is left in the fuel tank 5.

The fuel filter 21 and the pressure regulator 22 are attached to the fuel tank 5 in the positions forward of the attached position of the fuel pump unit 20. Accordingly, the fuel pump unit 20, the fuel filter 21 and the pressure regulator 22 can be compactly disposed. Further, the fuel filter 21, the pressure regulator 22 and the fuel pump unit 20 are disposed between the front end and the rear end of the fuel tank 5 in the back-and-forth direction. Therefore, the fuel filter 21, the pressure regulator 22 and the fuel pump unit 20 are compactly disposed in a space produced under the fuel tank 5.

The pressure regulator 22 and the injector 23 are disposed between the fuel pump unit 20 and the fuel filter 21 in the vehicle back-and-forth direction. Therefore, a short distance is produced between the pressure regulator 22 and the injector 23. With the structure, it is possible to shorten the third fuel pipe 28 connecting the pressure regulator 22 and the injector 23. It is thereby possible to reduce the amount of fuel flowing out of the third fuel pipe 28 in detaching the third fuel pipe 28 from the injector 23.

The pressure regulator 22 is disposed in a position higher than that of the fuel filter 21. Therefore, it is difficult for the fuel residing upstream of the pressure regulator 22 to flow out of the third fuel pipe 28 in detaching the third fuel pipe 28 from the injector 23. For example, it is difficult for the fuel remaining within the second fuel pipe 27 and the return fuel pipe 29 to flow out of the third fuel pipe 28. Therefore, it is possible to further reduce the amount of fuel flowing out of the third fuel pipe 28 in detaching the third fuel pipe 28 from the injector 23.

The axis of the fuel filter 21 is arranged along the surface of the fuel tank 5 that is opposed to the fuel filter 21. Therefore, the fuel filter 21 and the fuel tank 5 can be compactly disposed.

The axis of the pressure regulator 22 is arranged along the surface of the fuel tank 5 that is opposed to the pressure regulator 22. Therefore, the pressure regulator 22 and the fuel tank 5 can be compactly disposed.

The pressure regulator 22 is attached to the lower surface of the tank upper portion 501. Therefore, the pressure regulator 22 can be disposed in a higher position in comparison with the structure that the pressure regulator 22 is attached to the lower surface of the first tank lateral portion 502.

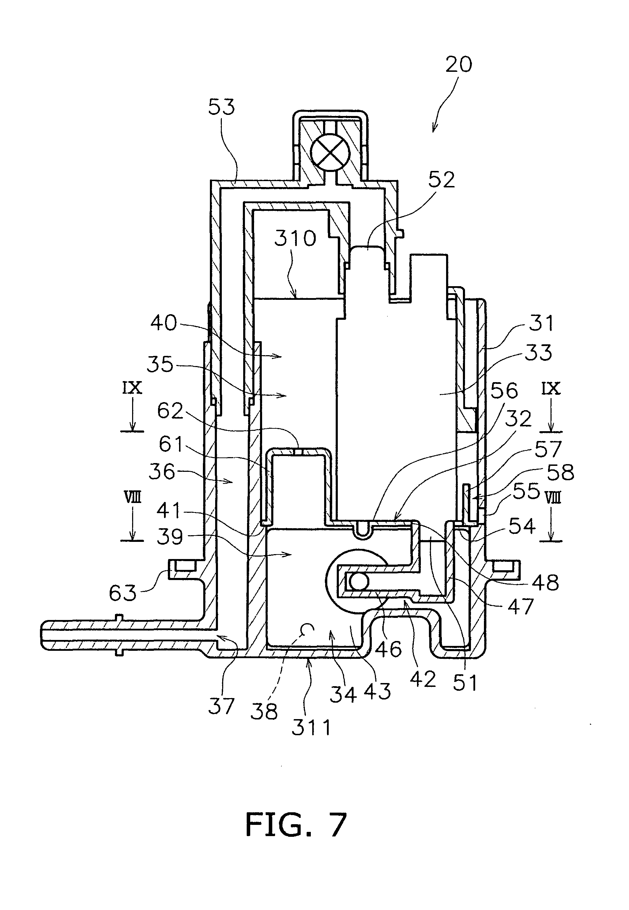

Next, the structure of the fuel pump unit 20 will be explained. FIG. 7 is a cross-sectional side view of the fuel pump unit 20. As illustrated in FIG. 7, the fuel pump unit 20 includes a case 31, a partition portion 32, a fuel pump 33 and a filter unit 34.

The case 31 has a cylindrical contour. One end of the case 31 is opened, while the other end of the case 31 is closed. It should be noted that in the following explanation of the fuel pump unit 20, a direction from the closed end to the opened end of the case 31 is defined as "an upward direction" and its opposite direction is defined as "a downward direction". Therefore, the upper portion of the case 31 has an opening 310, while the lower portion of the case 31 is closed with a bottom surface 311. In the explanation of the fuel pump unit 20, a horizontal direction means a direction arranged perpendicularly to the up-and-down direction. Further, in the following explanation of the fuel pump unit 20, a plan view means a view seen in the up-and-down direction.

The case 31 includes an inner space 35 and a discharge path 36. The discharge path 36 is extended in the up-and-down direction. The case 31 has a discharge port 37 and a return port 38. The discharge port 37 is disposed in the lower portion of the discharge path 36. The return port 38 is disposed in the lower portion of the inner space 35.

The partition portion 32 divides the inner space 35 of the case 31 into a return fuel chamber 39 and a main fuel chamber 40. The partition portion 32 divides the inner space 35 of the case 31 up and down. The return fuel chamber 39 is positioned under the partition portion 32. The main fuel chamber 40 is positioned over the partition portion 32. Therefore, the return fuel chamber 39 is disposed under the main fuel chamber 40. The aforementioned return port 38 is disposed in the return fuel chamber 39. The main fuel chamber 40 is communicated with the outside of the case 31 through the opening 310 formed in the upper portion of the case 31. The partition portion 32 is a member provided separately from the case 31. The case 31 has a stepped portion 41 on the inner surface of the lateral-side portion thereof. The partition portion 32 is supported by the stepped portion 41.

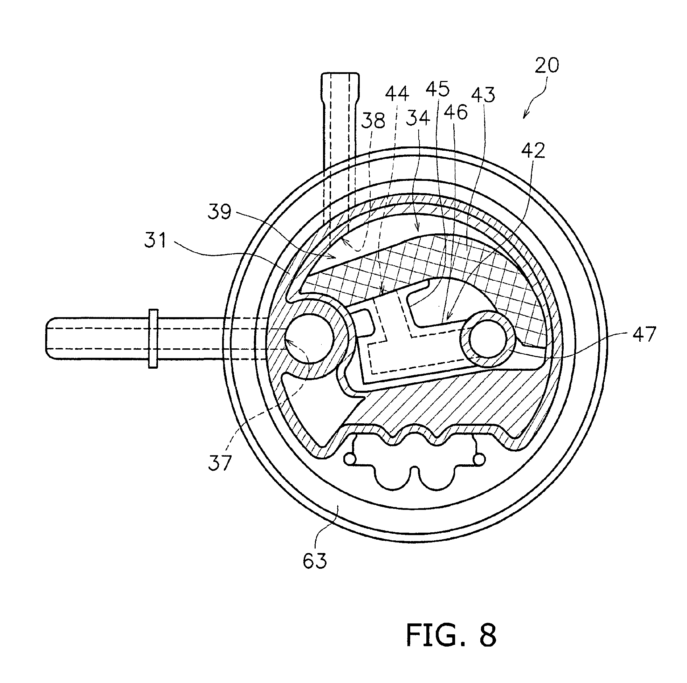

The filter unit 34 is disposed in the return fuel chamber 39. FIG. 8 is a cross-sectional view of FIG. 7 taken along a line VIII-VIII. As illustrated in FIGS. 7 and 8, the filter unit 34 includes a first connection pipe 42 and a filter 43. The first connection pipe 42 connects the filter 43 and the fuel pump 33. The first connection pipe 42 has an inlet port 44. The inlet port 44 is disposed in the return fuel chamber 39. The filter 43 is attached to the inlet port 44. The filter 43 is disposed in opposition to the return port 38 in the return fuel chamber 39. The filter 43 is disposed such that the return fuel chamber 39 is divided into a space for disposing therein the return port 38 and a space for disposing therein the first connection pipe 42.

The first connection pipe 42 includes a first pipe portion 45, a second pipe portion 46 and a third pipe portion 47. The first pipe portion 45 is connected to the inlet port 44. The first pipe portion 45 is extended in the horizontal direction. The second pipe portion 46 is connected to the first pipe portion 45. The second pipe portion 46 is extended in both of the horizontal direction and a direction intersecting with the first pipe portion 45. The third pipe portion 47 is connected to the second pipe portion 46. The third pipe portion 47 is extended in the up-and-down direction. As illustrated in FIG. 7, the partition portion 32 has an attachment opening 48. The upper portion of the third pipe portion 47 is connected to the attachment opening 48.

The fuel pump 33 is configured to inhale the fuel through the inlet port 44 and discharge the fuel through the discharge port 37. The fuel pump 33 is disposed over the partition portion 32. The fuel pump 33 has an inlet portion 51 and a discharge portion 52. The fuel pump 33 is configured to inhale the fuel through the inlet portion 51 and discharge the fuel through the discharge portion 52. The inlet portion 51 is disposed on the lower surface of the fuel pump 33. The inlet portion 51 is connected to the first connection pipe 42. Specifically, the inlet portion 51 is connected to the upper portion of the third pipe portion 47. The discharge portion 52 is disposed on the upper surface of the fuel pump 33. The discharge portion 52 is connected to a second connection pipe 53. The second connection pipe 53 connects the discharge portion 52 and the discharge path 36.

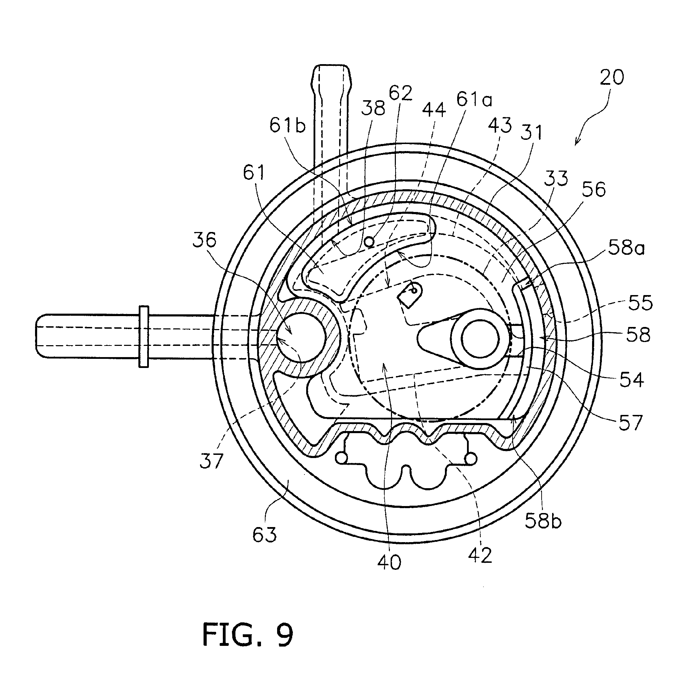

The partition portion 32 has a first opening 54. The main fuel chamber 40 and the return fuel chamber 39 are communicated through the first opening 54. FIG. 9 is a cross-sectional view of FIG. 7 taken along a line IX-IX. It should be noted that FIG. 9 omits illustration of the fuel pump 33 but illustrates only the position of the fuel pump 33 with a dashed two-dotted line. As illustrated in FIG. 9, the first opening 54 is disposed as far away from the inlet port 44 as possible. Specifically, the fuel pump 33 is positioned between the first opening 54 and the inlet port 44 in a plan view. Further, the path length from the first opening 54 to the inlet port 44 is longer than the path length from the return port 38 to the inlet port 44.

As illustrated in FIGS. 7 and 9, the case 31 has a second opening 55 formed in the lateral surface thereof. The main fuel chamber 40 and the outside of the case 31 are communicated through the second opening 55. The partition portion 32 has a flat portion 56 and a vertical wall portion 57. The fuel pump 33 is put on the flat portion 56. The aforementioned attachment opening 48 and first opening 54 are formed in the flat portion 56. The vertical wall portion 57 is upwardly protruded from the flat portion 56. The vertical wall portion 57 is integrally formed with the partition portion 32. The vertical wall portion 57 is disposed between the first opening 54 and the second opening 55. In other words, the vertical wall portion 57 is disposed for interfering with the flow of the fuel directed from the second opening 55 to the first opening 54. The vertical wall portion 57 has a shape curved along the inner surface of the lateral-side portion of the case 31. The vertical wall portion 57 is disposed away from the inner surface of the lateral-side portion of the case 31, while being disposed in opposition to the second opening 55. The upper end of the vertical wall portion 57 is positioned higher than the second opening 55. As illustrated in FIG. 7, a space 58 is opened upwards, which is produced between the vertical wall portion 57 and the inner surface of the lateral-side portion of the case 31. As illustrated in FIG. 8, the space 58 is closed at an end 58a, which is an end closer to the second opening 55 in the horizontal direction. Further, the space 58 is opened at an end 58b, which is the other end away from the second opening 55 in the horizontal direction.

The partition portion 32 has a convex portion 61 protruded upwards. The convex portion 61 is upwardly protruded from the flat portion 56. The convex portion 61 has an aperture 62 penetrating through the partition portion 32. The aperture 62 is formed in the upper surface of the convex portion 61. In a plan view, the convex portion 61 is at least partially disposed between the return port 38 and the inlet port 44. In a plan view, the convex portion 61 is at least partially overlapped with the space produced between the return port 38 and the filter 43. In other words, the convex portion 61 is at least partially positioned over the space produced between the return port 38 and the filter 43. The convex portion 61 is disposed laterally to the fuel pump 33. A lateral surface 61 a, which is one lateral surface of the convex portion 61, has a shape curved along the lateral surface of the fuel pump 33. A lateral surface 61 b, which is the other lateral surface of the convex portion 61, has a shape curved along the inner surface of the lateral-side portion of the case 31.

A flange portion 63 is disposed on the outer surface of the lateral-side portion of the case 31. The flange portion 63 is attached to the lower surface of the fuel tank 5. Accordingly, the fuel pump unit 20 is attached to the fuel tank 5. A portion of the fuel pump unit 20, positioned higher than the flange portion 63, is disposed inside the fuel tank 5. A portion of the fuel pump unit 20, positioned lower than the flange portion 63, is disposed outside the fuel tank 5.

Explanation will be hereinafter made for the fuel flow in the fuel pump unit 20. The fuel contained within the fuel tank 5 flows to the main fuel chamber 40 through the opening 310 formed in the upper portion of the case 31. Further, the fuel contained within the fuel tank 5 flows to the main fuel chamber 40 through the second opening 55. The fuel flows from the main fuel chamber 40 to the return fuel chamber 39 through the first opening 54. On the other hand, the aforementioned excess fuel, returned through the return fuel pipe 29, flows to the return fuel chamber 39 through the return port 38. The fuel pump 33 inhales the fuel contained in the return fuel chamber 39 through the inlet port 44 and discharges the fuel through the discharge port 37. The fuel, discharged through the discharge port 37, is supplied to the aforementioned injector 23.

In the fuel pump unit 20 according to the present exemplary embodiment, the inlet port 44 is disposed within the return fuel chamber 39. Therefore, in starting the engine 3, the fuel contained within the return fuel chamber 39 is more preferentially supplied to the engine 3 than the fuel contained within the main fuel chamber 40. In starting the engine 3, the fuel contained within the return fuel chamber 39 is the one that the composition thereof has not been changed by fuel supply. On the other hand, the fuel contained within the main fuel chamber 40 is the one that the composition thereof has been changed by fuel supply. The return fuel chamber 39 and the main fuel chamber 40 are divided by the partition portion 32. Therefore, the fuel contained within the return fuel chamber 39 and that contained within the main fuel chamber 40 are less easily mixed with each other. Therefore, immediately after starting the engine 3, a fuel injection control can be executed based on the heretofore known fuel composition of a pre-fuel supply state. Further, it is not required to increase the volume of the pipe to be connected to the fuel pump 33. Therefore, the fuel pump unit 20 can be compactly formed while being easily attachable to the motorcycle 1.

An exemplary embodiment has been explained above. However, the present teaching is not limited to the aforementioned exemplary embodiment, and a variety of changes can be made without departing from the scope of the present teaching.

The structure of the fuel supply system is not limited to that described above. For example, one of the fuel filter 21 and the pressure regulator 22 may be integrated with the fuel pump unit 20. In this case, the other of the fuel filter 21 and the pressure regulator 22 is provided separately from the fuel pump unit 20, and is attached to the fuel tank 5. In this case, one or more of the fuel pipes 26, 27, 28 and 29 may not be provided.

The position of the fuel pump unit 20, the fuel filter 21 or the pressure regulator 22 is not limited to that described above and may be changed. For example, in the aforementioned exemplary embodiment, the fuel filter 21 is attached to the first tank lateral portion 502. However, the fuel filter 21 may be attached to the second tank lateral portion 503. In other words, the fuel filter 21 may be disposed inwards of the second cover member 192. Alternatively, the fuel filter 21 may be disposed laterally to either the first tank lateral portion 502 or the second tank lateral portion 503.

The oxygen sensor 24 may be disposed in an exhaust path portion formed within a cylinder head of the engine 3. Alternatively, the oxygen sensor 24 may be disposed in the exhaust pipe 74 connected to the cylinder head. The oxygen sensor 24 may be either a sensor with a heater or a sensor without a heater.

The structure of the fuel pump unit 20 is not limited to that described above. For example, the partition portion may divide the inner space of the case in the horizontal direction. The position of the first opening is not limited to that described above. It should be noted that the first opening is preferably disposed as far away from the inlet port as possible in order to suppress change of the fuel composition to a low level in starting the engine 3.

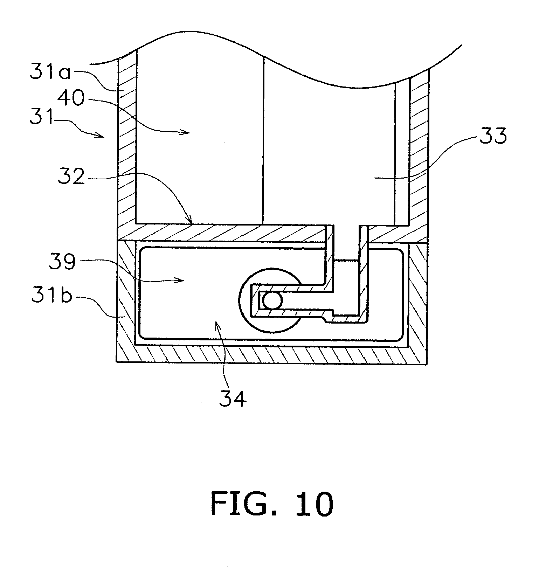

The structures of the case and the partition portion may be changed. For example, FIG. 10 is a schematic cross-sectional side view of the fuel pump unit 20 according to a modification. As illustrated in FIG. 10, the case 31 includes a first case portion 31 a and a second case portion 31 b. The first case portion 31 a and the second case portion 31 b are members provided separately from each other. The second case portion 31 b is attached to the first case portion 31 a, while being disposed under the first case portion 31 a. The partition portion 32 is the bottom surface of the first case portion 31 a.

The position of the vertical wall portion may be changed. It should be noted that the vertical wall portion is preferably positioned between the first opening and the second opening when the second opening is disposed closer to the first opening.

The motorcycle is not limited to a vehicle using alcohol fuel and may be a vehicle using gasoline fuel.

## Claims

1. A motorcycle comprising:
a head pipe (11);
a vehicle body frame (2) being extended rearwards and downwards from the head pipe (11);
a fuel tank (5) being disposed over and astride the vehicle body frame (2), the fuel tank (5) including a tank upper portion (501) and at least one tank lateral portion (502), the tank upper portion (501) being disposed over the vehicle body frame (2), the tank lateral portion (502) being disposed laterally to the vehicle body frame (2);
an engine (3) being disposed under the vehicle body frame (2);
a fuel pump unit (20) being attached to a lower surface of the fuel tank (5), the fuel pump unit (20) being configured to supply a fuel to the engine (3) from the fuel tank (5);
a filter (21) being disposed downstream of the fuel pump unit (20) in a fuel supply path produced from the fuel tank (5) to the engine (3); and
a pressure regulator (22) being disposed downstream of the filter (21) in the fuel supply path produced from the fuel tank (5) to the engine (3), **characterized in that** the filter (21) is attached to the fuel tank (5), and
the pressure regulator (22) is attached to the fuel tank (5).

2. A motorcycle according to claim 1, **characterized in that** the filter (21) is attached to the tank lateral portion (502).

3. A motorcycle according to claim 1 or 2, **characterized in that** the filter (21) is positioned under the tank lateral portion (502).

4. A motorcycle according to any of claims 1 to 3, **characterized by** at least one cover member (191) for directing an air stream, the cover member (191) being disposed laterally to the filter (21).

5. A motorcycle according to any of claims 1 to 4, **characterized in that** the lower surface of the fuel tank (5) is slanted rearwards and obliquely downwards, the fuel pump unit (20) is attached to a rear portion of the fuel tank (5), and the filter (21) and the pressure regulator (22) are respectively attached to the fuel tank (5) in positions forward of the attached position of the fuel pump unit (20).

6. A motorcycle according to any of claims 1 to 5, **characterized by** an injector (23) being connected to the pressure regulator (22) through a pipe (28), the injector (23) being configured to supply the fuel to the engine (3), wherein
the pressure regulator (22) and the injector (23) are disposed between the fuel pump unit (20) and the filter (21) in a vehicle back-and-forth direction.

7. A motorcycle according to any of claims 1 to 6, **characterized in that** the pressure regulator (22) is disposed higher than the filter (21).

8. A motorcycle according to any of claims 1 to 7, **characterized in that** an axis of the filter (21) is disposed along a fuel tank (5) surface opposed to the filter (21).

9. A motorcycle according to any of claims 1 to 8, **characterized in that** an axis of the pressure regulator (22) is disposed along a fuel tank (5) surface opposed to the pressure regulator (22).

10. A motorcycle according to any of claims 1 to 9, **characterized in that** a lower surface of the tank upper portion (501) is positioned higher than a lower surface of the tank lateral portion (502), and
the pressure regulator (22) is attached to the lower surface of the tank upper portion (501).

11. A motorcycle according to any of claims 1 to 10, **characterized in that** the filter (21) is connected to the fuel pump unit (20) through a pipe (26).

12. A motorcycle according to any of claims 1 to 11, **characterized in that** the pressure regulator (22) is connected to the filter (21) through a pipe (27).

13. A motorcycle according to any of claims 1 to 12, **characterized by** a first tank lateral portion (502) and a second tank lateral portion (503), the first tank lateral portion (502) is disposed laterally on one side of a portion (18) of the body frame (2) and the second tank lateral portion (503) is disposed laterally on another side of a portion of the body frame (2).

14. A motorcycle according to any of claims 1 to 13, **characterized by** a first cover member (191) and a second cover member (192), the first cover member (191) is positioned laterally one side of the fuel tank (5), and the second cover member (192) is positioned laterally another side of the fuel tank (5).

## Patentansprüche

1. Ein Motorrad mit:
einem Kopfrohr (11);
einem Fahrzeug-Körperrahmen (2), der sich nach hinten und unten von dem Kopfrohr (11) erstreckt;
einem Kraftstofftank (5), der über und um den Fahrzeugkörper-Rahmen (2) positioniert ist, der Kraftstofftank (5) beinhaltet einen Tank-Oberteil (501) und
zumindest einen Tank-Seitenteil (502), der Tank-Oberteil (501) ist über dem Fahrzeugkörper-Rahmen (2) positioniert, der Tank-Seitenteil (502) ist seitlich zu dem Fahrzeug-Körperrahmen (2) positioniert;
einem Motor (3), der unter dem Fahrzeug-Körperrahmen (2) positioniert ist;
einer Kraftstoff-Pumpeneinheit (20), die an einer unteren Fläche des Kraftstofftanks (5) angebracht ist, die Kraftstoff-Pumpeneinheit (20) ist konfiguriert, um Kraftstoff zu dem Motor (3) von dem Kraftstofftank (5) zuzuführen;
einem Filter (21), der stromauf von der Kraftstoff-Pumpeneinheit (20) in einem Kraftstoff-Zufuhrpfad, hergestellt von dem Kraftstofftank (5) zu dem Motor (3),
positioniert ist; und
einem Druckregler (22), der stromauf von dem Filter (21) in dem Kraftstoff-Zufuhrpfad, hergestellt von dem Kraftstofftank (5) zu dem Motor (3), positioniert ist,
**dadurch gekennzeichnet, dass** der Filter (21) an dem Kraftstofftank (5) angebracht ist, und der Druckregler (22) an dem Kraftstofftank (5) angebracht ist.

2. Ein Motorrad gemäß Anspruch 1, **dadurch gekennzeichnet, dass** der Filter (21) an dem Tank-Seitenteil (502) angebracht ist.

3. Ein Motorrad gemäß Anspruch 1 oder 2, **dadurch gekennzeichnet, dass** der Filter (21) unter dem Tank-Seitenteil (102) positioniert ist.

4. Ein Motorrad gemäß einem der Ansprüche 1 bis 3, **gekennzeichnet durch** zumindest ein Abdeck-Element (191) zum Richten eines Luftstroms, das Abdeck-Element (191) ist seitlich zu dem Filter (21) positioniert.

5. Ein Motorrad gemäß einem der Ansprüche 1 bis 4, **dadurch gekennzeichnet, dass** die untere Fläche des Kraftstofftanks (5) nach hinten geneigt und schräg nach unten ist, die Kraftstoff-Pumpeneinheit (20) ist an einem hinteren Abschnitt des Kraftstofftanks (5) angebracht, und der Filter (21) und der Druckregler (22) sind jeweils an dem Kraftstofftank (5) in Positionen vor der Anbringungsposition der Kraftstoff-Pumpeneinheit (20) angebracht.

6. Ein Motorrad gemäß einem der Ansprüche 1 bis 5, **gekennzeichnet durch** einen Einspritzer (23), der mit dem Druckregler (22) **durch** eine Leitung (28) verbunden ist, der Einspritzer (23) ist konfiguriert, um Kraftstoff zu dem Motor (3) zuzuführen, wobei der Druckregler (22) und der Einspritzer (23) zwischen der Kraftstoff-Pumpeneinheit (20) und dem Filter (21) in einer Fahrzeug-Rück-und-Vor-Richtung positioniert ist.

7. Ein Motorrad gemäß einem der Ansprüche 1 bis 6, **dadurch gekennzeichnet, dass** der Druckregler (22) höher als der Filter (21) positioniert ist.

8. Ein Motorrad gemäß einem der Ansprüche 1 bis 7, **dadurch gekennzeichnet, dass** eine Achse des Filters (21) entlang einer Kraftstofftank (5) Fläche gegenüberliegend zu dem Filter (21) positioniert ist.

9. Ein Motorrad gemäß einem der Ansprüche 1 bis 8, **dadurch gekennzeichnet, dass** eine Achse des Druckreglers (22) entlang einer Kraftstofftank (5) Fläche gegenüberliegend zu den Druckregler (22) positioniert ist.

10. Ein Motorrad gemäß einem der Ansprüche 1 bis 9, **dadurch gekennzeichnet, dass** eine untere Fläche des Tank-Oberteils (501) höher positioniert ist als eine untere Fläche des Tank-Seitenteils (502), und der Druckregler (22) ist an der unteren Fläche des Tank-Oberteils (501) angebracht.

11. Ein Motorrad gemäß einem der Ansprüche 1 bis 10, **dadurch gekennzeichnet, dass** der Filter (21) mit der Kraftstoff-Pumpeneinheit (20) durch eine Leitung (26) verbunden ist.

12. Ein Motorrad gemäß einem der Ansprüche 1 bis 11, **dadurch gekennzeichnet, dass** der Druckregler (22) mit dem Filter (21) durch eine Leitung (27) verbunden ist.

13. Ein Motorrad gemäß einem der Ansprüche 1 bis 12, **gekennzeichnet durch** einen ersten Tank-Seitenteil (502) und einem zweiten Tank-Seitenteil (503), der erste Tank-Seitenteil (502) ist seitlich an einer Seite eines Abschnitts (18) des Körperrahmens (2) positioniert und der zweite Tank-Seitenteil (503) ist seitlich an der anderen Seite eines Abschnitts des Körperrahmens (2) positioniert.

14. Ein Motorrad gemäß einem der Ansprüche 1 bis 13, **gekennzeichnet durch** ein erstes Abdeck-Element (191) und ein zweites Abdeck-Element (192), das erste Abdeck-Element (191) ist seitlich an einer Seite des Kraftstofftanks (5) positioniert, und das zweite Abdeck-Element (192) ist seitlich an der anderen Seite des Kraftstofftanks (5) positioniert.

## Revendications

1. Motocyclette comprenant :
- un tube de tête (11) ;
- un corps de châssis de véhicule (2) s'étendant vers l'arrière et vers le bas à partir du tube de tête (11) ;
- un réservoir de carburant (5) étant disposé par-dessus et à califourchon sur le corps de châssis de véhicule (2), le réservoir de carburant (5) incluant une portion supérieure de réservoir (501) et au moins une portion latérale de réservoir (502), la portion supérieure de réservoir (501) étant disposée par-dessus le corps de châssis de véhicule (2), la portion latérale de réservoir (502) étant disposée latéralement sur le corps de châssis de véhicule (2) ;
- un moteur (3) étant disposé sous le corps de châssis de véhicule (2) ;
- une unité de pompe à carburant (20) étant fixée à une surface inférieure du réservoir de carburant (5), l'unité de pompe à carburant (20) étant configurée pour alimenter en un carburant le moteur (3) à partir du réservoir de carburant (5) ;
- un filtre (21) étant disposé en aval de l'unité de pompe à carburant (20) dans un chemin d'alimentation en carburant produit du réservoir de carburant (5) au moteur (3) ; et
- un régulateur de pression (22) étant disposé en aval du filtre (21) dans le chemin d'alimentation en carburant produit du réservoir de carburant (5) au moteur (3), **caractérisée en ce que** :
- le filtre (21) est fixé au réservoir de carburant (5) ; et
- le régulateur de pression (22) est fixé au réservoir de carburant (5).

2. Motocyclette selon la revendication 1, **caractérisée en ce que** le filtre (21) est fixé à la portion latérale de réservoir (502).

3. Motocyclette selon les revendications 1 ou 2, **caractérisée en ce que** le filtre (21) est positionné sous la portion latérale de réservoir (502).

4. Motocyclette selon l'une quelconque des revendications 1 à 3, **caractérisée par** au moins un élément de couverture (191) pour diriger un flux d'air, l'élément de couverture (191) étant disposé latéralement au filtre (21).

5. Motocyclette selon l'une quelconque des revendications 1 à 4, **caractérisée en ce que** la surface inférieure du réservoir de carburant (5) est inclinée vers l'arrière et obliquement vers le bas ;
- l'unité de pompe à carburant (20) est fixée à une portion arrière du réservoir de carburant (5) ; et
- le filtre (21) et le régulateur de pression (22) sont respectivement fixés au réservoir de carburant (5) dans des positions en avant de la position de fixation de l'unité de pompe à carburant (20).

6. Motocyclette selon l'une quelconque des revendications 1 à 5, **caractérisée par** un injecteur (23) connecté au régulateur de pression (22) par une durite (28), l'injecteur (23) étant configuré pour alimenter en carburant le moteur (3), dans lequel
- le régulateur de pression (22) et l'injecteur (23) sont disposés entre l'unité de pompe à carburant (20) et le filtre (21) dans une direction d'arrière en avant du véhicule.

7. Motocyclette selon l'une quelconque des revendications 1 à 6, **caractérisée en ce que** le régulateur de pression (22) est disposé plus haut que le filtre (21).

8. Motocyclette selon l'une quelconque des revendications 1 à 7, **caractérisée en ce qu'**un axe du filtre (21) est disposé suivant une surface du réservoir de carburant (5) opposée au filtre (21).

9. Motocyclette selon l'une quelconque des revendications 1 à 8, **caractérisée en ce qu'**un axe du régulateur de pression (22) est disposé suivant une surface du réservoir de carburant (5) opposée au régulateur de pression (22).

10. Motocyclette selon l'une quelconque des revendications 1 à 9, **caractérisée en ce qu'**une surface inférieure de la portion supérieure de réservoir (501) est positionnée plus haut qu'une surface inférieure de la portion latérale de réservoir (502), et
- le régulateur de pression (22) est fixé à la surface inférieure de la portion supérieure de réservoir (501).

11. Motocyclette selon l'une quelconque des revendications 1 à 10, **caractérisée en ce que** le filtre (21) est connecté à l'unité de pompe à carburant (20) par une durite (26).

12. Motocyclette selon l'une quelconque des revendications 1 à 11, **caractérisée en ce que** le régulateur de pression (22) est connecté au filtre (21) par une durite (27).

13. Motocyclette selon l'une quelconque des revendications 1 à 12, **caractérisée par** une première portion latérale de réservoir (502) et une seconde portion latérale de réservoir (503), la première portion latérale de réservoir (502) est disposée latéralement sur un côté d'une portion (18) du corps de châssis (2) et la seconde portion latérale de réservoir (503) est disposée latéralement sur un autre côté d'une portion du corps de châssis (2).

14. Motocyclette selon l'une quelconque des revendications 1 à 13, **caractérisée par** un premier élément de couverture (191) et un second élément de couverture (192), le premier élément de couverture (191) est positionné latéralement sur un côté du réservoir de carburant (5) et le second élément de couverture (192) est positionné latéralement sur un autre côté du réservoir de carburant (5).
